# EUROPÄISCHE PATENTSCHRIFT

(11) **EP 4 345 192 B1**
(45) Veröffentlichungstag und Bekanntmachung des Hinweises auf die Patenterteilung: **04.06.2025**
(21) Anmeldenummer: 22020462.2
(22) Anmeldetag: 28.09.2022
(51) Int. Cl.: C25B 1/04, C25B 15/08

(54) **VERFAHREN ZUM BETREIBEN EINER ELEKTROLYSEANLAGE UND ELEKTROLYSEANLAGE**
METHOD FOR OPERATING AN ELECTROLYSIS SYSTEM, AND ELECTROLYSIS SYSTEM
PROCÉDÉ DE FONCTIONNEMENT D'UNE INSTALLATION D'ÉLECTROLYSE ET INSTALLATION D'ÉLECTROLYSE

(43) Veröffentlichungstag der Anmeldung: 03.04.2024
(73) Patentinhaber: Linde GmbH, 82049 Pullach (DE)
(72) Erfinder: Wellenhofer, Anton, 82049 Pullach (DE); Müller-Thorwart, Ole, 82049 Pullach (DE); Birk, Robert, 82049 Pullach (DE); Dillig, Marius, 82049 Pullach (DE); Wolf, Andreas, 82049 Pullach (DE)
(74) Vertreter: Imhof, Dietmar

(56) Entgegenhaltungen:
- EP-A1- 1 995 352
- EP-A1- 3 272 907

## Beschreibung

Die Erfindung betrifft ein Verfahren zum Betreiben einer Elektrolyseanlage zur Wasserelektrolyse, sowie eine solche Elektrolyseanlage, die z.B. zur Gewinnung von Wasserstoff eingesetzt wird.

### Stand der Technik

Zur Gewinnung von Wasserstoff kann die sog. Elektrolyse eingesetzt werden, bei der z.B. Wasser durch elektrische Energie in Sauerstoff und Wasserstoff aufgespaltet bzw. umgesetzt wird. Hierbei wird auch von der Wasser-Elektrolyse gesprochen. Hier kommt z.B. die sog. Protonen-Austausch-Membran-Elektrolyse (PEM-Elektrolyse, "Proton Exchange Membrane"-Elektrolyse) in Betracht.

Ein Großteil des Wassers verbleibt bei der PEM-Elektrolyse in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise in einem Behälter aus dem Wasser abgeschieden.

Es kann jedoch vorkommen, dass auch Wasserstoff zu einem gewissen Teil auf der Sauerstoffseite entsteht oder wieder dorthin zurück diffundiert oder anderweitig, z.B. aufgrund Defekten oder Rissen in der Membran, dorthin gelangt. Es kann als ein explosives Gemisch entstehen, das sich unter Umständen irgendwo entzünden und durch die entstehende Explosion die Elektrolyseanlage beschädigen kann. Vor diesem Hintergrund stellt sich die Aufgabe, eine Elektrolyseanlage bzw. deren Betrieb sicherer zu machen.

### Offenbarung der Erfindung

Diese Aufgabe wird durch ein Verfahren zum Betreiben einer Elektrolyseanlage sowie eine Elektrolyseanlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die Erfindung beschäftigt sich mit der Wasser-Elektrolyse sowie Elektrolyseanlagen bzw. deren Betrieb hierfür. Solche Elektrolyseanlagen dienen typischerweise dem Erzeugen oder Gewinnen von Wasserstoff mittels Elektrolyse. Bei der sog. Wasser-Elektrolyse wird Wasser in Wasserstoff und Sauerstoff umgesetzt (gespalten), d.h. neben Wasserstoff wird also zugleich auch immer Sauerstoff gewonnen bzw. erzeugt. Bei der Wasser-Elektrolyse gibt es z.B. die sog. alkalische Wasser-Elektrolyse (AEL, "Alkaline Electrolysis") oder die sog. Protonen-Austausch-Membran-Elektrolyse (PEM-Elektrolyse, "Proton Exchange Membrane"-Elektrolyse). Die Grundlagen hierzu sind an sich bekannt, z.B. aus " Bessarabov et al: PEM electrolysis for Hydrogen production. CRC Press."

Daneben gibt es auch sog. Festoxid-Elektrolyseurzellen (SOEC, "Solid Oxide Electrolysis Cell") und die Anionen-Austausch-Membran-Elektrolyse (AEM-Elektrolyse, "Anion Exchange Membrane"-Elektrolyse). Insbesondere diejenigen Elektrolyse-Technologien, die bei niedrigen Temperaturen erfolgen, also z.B. die PEM-, AEL- und AEM-Elektrolyse, eignen sich aufgrund der Möglichkeiten eines flexiblen Betriebs zur Unterstützung des Übergangs der Energiegewinnung hin zu erneuerbaren Energien.

Bei der PEM-Elektrolyse z.B. wird Wasser, und zwar insbesondere demineralisiertes Wasser, als Einsatzmedium einer Elektrolyseeinheit mit einer Protonen-Austausch-Membran (PEM) zugeführt, in der das Einsatzmedium, also das Wasser, in Wasserstoff und Sauerstoff umgesetzt (gespalten) wird.

Ein Großteil des Wassers verbleibt bei der PEM-Elektrolyse, wie erwähnt, in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise in einem Behälter (der als Gas- bzw. Sauerstoff-Abscheider verwendet wird) aus dem Wasser abgeschieden.

Es kann jedoch vorkommen, dass auch Wasserstoff zu einem gewissen Teil auf der Sauerstoffseite entsteht oder wieder dorthin zurück diffundiert oder anderweitig, z.B. aufgrund Defekten oder Rissen in der Membran, dorthin gelangt. Der von der Sauerstoff-Seite abzuführende Fluidstrom weist damit nicht nur Wasser und Sauerstoff, sondern ggf. auch Wasserstoff auf, allgemein also Wasser und Gas; unter dem Begriff Gas soll hier allgemein gasförmiges Medium, nicht nur ein einzelnes Gas, sondern auch ein ggf. vorhandenes Gasgemisch verstanden werden. Auf der Sauerstoff-Seite der Elektrolyseeinheit bzw. im Fluidstrom kann also ein explosives Gemisch entstehen, das sich unter Umständen irgendwo in der Elektrolyseanlage stromabwärts der Elektrolyseeinheit entzünden kann, sei es im Fluidstrom zum Sauerstoff- bzw. Gas-Abscheider oder danach im dort abgeschiedenen und abgeführten Gasstrom (es wird dann eben nicht nur der Sauerstoff, sondern auch der ggf. vorhandene Wasserstoff abgeschieden). Durch die entstehende Explosion bzw. Detonation kann die Elektrolyseanlage beschädigt werden.

Eine Entzündung des Gemisches kann insbesondere dann auftreten, wenn ein Anteil an Wasserstoff im Gas (der Wasseranteil ist hierbei nicht relevant) einen gewissen vorgegebenen Anteil, die sog. untere Explosionsgrenze (LEL, "lower explosive limit") überschreitet; dieses liegt z.B. ei einem Standby-Betrieb oder Betrieb der Elektrolyseanlage mit geringer Last typischerweise bei ca. 4%. Die (untere) Explosionsgrenze eines Gases gibt den Gehalt in einem Gasgemisch an, ab dem eine Entzündung bzw. Explosion bei zugleich ausreichendem Sauerstoffgehalt möglich ist.

Da eine Zündquelle in der Elektrolyseeinheit oder irgendwo stromabwärts in aller Regel nicht ausgeschlossen oder vermieden werden kann, muss mit einer potentiellen Entzündung bzw. Explosion oder Detonation beim Betrieb einer Elektrolyseanlage immer gerechnet werden. Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Die Reaktion zwischen Wasserstoff und Sauerstoff läuft sehr schnell ab und erzeugt sehr hohe Flammengeschwindigkeiten, d.h. hohe Geschwindigkeiten, mit denen sich die Flammen z.B. in entsprechenden Fluidverbindungen oder Fluidleitungen ausbreiten. Bei einer Explosion liegt diese unterhalb, bei einer Detonation typischerweise deutlich oberhalb der Schallgeschwindigkeit. Durch Explosionen und Detonationen von Gasen bzw. Gasgemischen kommt es zu einem massiven Druckanstieg. Typischerweise kann bei einer Explosion mit einer Druckerhöhung um den Faktor Zehn gerechnet werden. Die Auswirkungen einer Detonation sind deutlich schwerwiegender. Hier kann der Druckanstiegsfaktor 25 oder auch 50 und mehr betragen. Eine Explosion kann nach einer bestimmten Anlauflänge und einer Mindestkonzentration an Brennstoff und Sauerstoff in eine Detonation umschlagen. Es können also Drücke entstehen, die teils das 25-fache oder sogar 50-fache des eigentlichen Betriebsdrucks in der Elektrolyseanlage, dort insbesondere der Sauerstoffseite und dem Verlauf stromabwärts, ggf. auch stromaufwärts, betragen. Um also etwaige Schäden an der Elektrolyseanlage zu vermeiden, können die betreffenden Fluid- oder Gasleitungen für entsprechend hohe Drücke ausgelegt werden. Je nach Elektrolyseanlage und Verwendung des Sauerstoffs, können hierbei sehr viele oder lange Leitungen betroffen sein. Dies betrifft nicht nur die Fluidleitungen von der Elektrolyseeinheit zum Gas-Abscheider, sondern auch etwaige Gasleitungen, in denen der abgeschiedene Sauerstoff (und ggf. Wasserstoff) zu einer oder mehreren gewünschten Verwendungen oder sonstigen Verarbeitungsschritten geführt wird. Dies kann zu besonders hohen Kosten führen. EP3272907 offenbart eine Zündquelle nach einem Gas-Abscheider und EP1995352 schlägt auch eine aktive Zündquelle vor.

Vor diesem Hintergrund wird nun vorgeschlagen, bei einer Elektrolyseanlage wie vorstehend beschrieben in dem Fluidstrom von der Sauerstoff-Seite der Elektrolyseeinheit zu dem Gas-Abscheider (bzw. dem als Gas-Abscheider verwendeten Behälter) aktiv eine Zündung zu erzeugen (bzw. hervorzurufen), indem eine geeignete Zündeinrichtung vorgesehen wird. Damit wird etwaiger vorhandener Wasserstoff bzw. ein ggf. zündfähiges Gas bzw. Gasgemisch kontrolliert an einer gewünschten Stelle entzündet. Ein unkontrolliertes Entzünden an einer beliebigen Stelle wird damit verhindert, da stromabwärts der aktiven Entzündung kein zündfähiges Gas- bzw. Gasgemisch mehr vorhanden sein kann. Dementsprechend ist es auch zweckmäßig, wenn die Entzündung möglichst nahe an oder unmittelbar nach der Elektrolyseeinheit vorgenommen wird. Es sei erwähnt, dass hierbei zwar einer Zündung der Zündeinrichtung bzw. in der Zündeinrichtung erfolgt, das Gas bzw. Gasgemisch im Regelfall dabei jedoch nicht gezündet wird, nur in Fällen oder Ausnahmefällen, in denen z.B. die Konzentration an Wasserstoff zu hoch ist. Vorzugsweise wird die Zündung in regelmäßigen oder unregelmäßigen zeitlichen Abständen, insbesondere mit einer vorgegebenen Frequenz, von z.B. einem Wert zwischen 5Hz und 50Hz, erzeugt. Damit wird erreicht, dass immer nur wenig neuer Wasserstoff im Fluidstrom vorhanden ist, der bei der Entzündung reagiert, sodass die Ausmaße der Explosion geringgehalten werden.

Bevorzugt ist auch, wenn überwacht wird, ob die Zündung erzeugt wird, und wobei insbesondere, wenn erkannt wird, dass die Zündung nicht erzeugt wird - also z.B. aufgrund eines Fehlers nicht erzeugt worden ist, obwohl sie eigentlich ausgelöst worden ist -, wird eine Fehlerreaktion eingeleitet, z.B. eine Fehlermeldung ausgegeben oder die Elektrolyseanlage abgeschaltet. Hierzu kann z.B. eine optische Überwachung in der Zündeinrichtung vorgesehen sein, um zu detektieren, ob ein Zündfunke erzeugt worden ist. Ebenso kann z.B. eine Spannungs- oder Stromüberwachung vorgesehen sein, mit der detektiert wird, ob der Zündfunke erzeugt worden ist. Dies erlaubt die Überwachung der Zündung der Zündeinrichtung unabhängig davon, ob dabei auch das Gas bzw. Gasgemisch gezündet worden ist.

Da auch bei der aktiv herbeigeführten Zündung hohe Drücke entstehen können, ist es zweckmäßig, wenn eine Zündkammer vorgesehen wird, in der die Zündeinrichtung angeordnet ist, und die Teil einer Fluidverbindung ist, in der der Fluidstrom geführt wird; der Fluidstrom wird also durch die Zündkammer geführt. Diese Zündkammer kann z.B. kugelförmig ausgebildet sein, um möglichst hohen Drücken standzuhalten. Außerdem kann diese Zündkammer möglichst klein ausgestaltet sein, um nur einen kleinen Gasraum und kurze Abbrandzeiten zu haben.

Bevorzugt weist die Fluidverbindung, in Strömungsrichtung, nach der Zündkammer, insbesondere unmittelbar nach der Zündkammer, einen siphon- oder U-förmigen Verlauf auf. Insbesondere ist der siphon- oder U-förmige Verlauf der Fluidverbindung derart ausgebildet, dass, in Strömungsrichtung, zuerst ein zumindest im Wesentlichen vertikal nach unten (d.h. in Gravitationsrichtung) und dann ein zumindest im Wesentlichen vertikal nach oben (d.h. entgegen der Gravitationsrichtung) verlaufender Abschnitt vorgesehen sind. Ein solcher Verlauf der Fluidleitung, z.B. in Form eines entsprechend geformten Rohres, stellt sicher, dass eine auftretende Explosionsfront sich stromabwärts nicht weiter ausbreitet, sondern durch den siphon- oder U-förmige Verlauf von der weiteren Ausbreitung abgehalten wird.

Der vertikale nach unten verlaufende Abschnitt und/oder der vertikal nach oben verlaufende Abschnitt sollten dabei zumindest eine gewisse Länge aufweisen. Der Durchmesser sowie das Innere, sowie ggf. ebenfalls eine Länge der vertikal verlaufenden Abschnitte, sollten insbesondere derart ausgebildet sein, dass z.B. ein sog. "bubble flow" (Blasenströmung), , ein sog. "slugflow" (Pfropfenströmung) oder ein sog. "churnflow" (Kippenströmung oder Schaumströmung) aufrechterhalten werden können, in denen Gasblasen in Flüssigkeit enthalten sind. Ein "annular flow" (Ringströmung oder Filmströmung) oder "mist flow" (Nebelströmung) sollten hingegen durch geeignetes Design oder Formgebung vermieden werden.

Es ist insbesondere eine Strömungsform erwünscht, bei der die Gasphase sicher durch eine Flüssigphase unterbrochen wird, was bei "annular flow" (Ringströmung oder Filmströmung) und "mist flow" (Nebelströmung) nicht der Fall ist, die daher per Design möglichst ausgeschlossen werden sollen. Es sei erwähnt, dass der siphon- oder U-förmige Verlauf der Fluidverbindung eine Möglichkeit darstellen, die gewünschte Strömungsform zu erreichen, jedoch sind auch andere Formen und Verläufe der Fluidverbindung möglich, da es insbesondere auf die Unterbrechung der Gasphase durch die Flüssigphase ankommt.

Gebogene Abschnitte des siphon- oder U-förmigen Verlaufs sollten entsprechend geformt sein, um Reflexionen der Druckwellen zu verhindern, also z.B. gemäß TRGS 407 mindestes 5 L/D (L/D steht dabei für ein Verhältnis von Länge zu Durchmesser) aufweisen.

Durch diese gezielt herbeigeführt Zündung sowie insbesondere die speziell gestaltete Zündkammer können die übrigen Leitungen für deutlich geringeren Druck ausgelegt werden als bisher, was eine deutliche Kosteneinsparung mit sich bringt. Dies ist insbesondere insofern von Vorteil, als damit auch Kunststoff, z.B. faserverstärkter Kunststoff, in weiten Teilen der Leitungen verwendet werden kann, sodass die Verwendung von Metallleitungen und die damit einhergehenden höheren Degradationsraten in der PEM vermieden werden. Die Verwendung von Kunststoff für Leitungen wäre bei z.B. 3,5 barg Betriebsdruck in der Fluidleitung oder einer Leitung für abgeführten Sauerstoff zumindest bei größeren Durchmessern in der Regel nicht möglich, da diese dann mindestens dem 25-fachen Druck nicht standhalten würden. Eine Verdichtung des Gasstroms stromaufwärts um etwaigen dennoch verbleibenden Wasserstoff zu entfernen wäre bisher auch nicht möglich, da hierfür nötige Kompressoren diesen Drücken in der Regel ebenfalls nicht standhalten.

Wenngleich die Erfindung vorwiegend in Bezug auf die PEM-Elektrolyse beschrieben wird, so sei darauf hingewiesen, dass sich die Erfindung für alle Wasser-Elektrolysen eignet, bei denen die Gefahr eines zündfähigen Gemisches aus Wasserstoff und Sauerstoff besteht.

Die Erfindung wird nachfolgend unter Bezugnahme auf die beigefügte Zeichnung näher erläutert, welche eine Anlage gemäß einer bevorzugten Ausführungsform der vorliegenden Erfindung zeigt.

Kurze Beschreibung der Zeichnung
- Figur 1: zeigt schematisch eine erfindungsgemäßen Elektrolyseanlage in einer bevorzugten Ausführungsform.
- Figur 2: zeigt schematisch einen Teil der Elektrolyseanlage aus Figur 1.
- Figur 3: zeigt schematisch verschiedene Strömungsarten.

### Ausführliche Beschreibung der Zeichnung

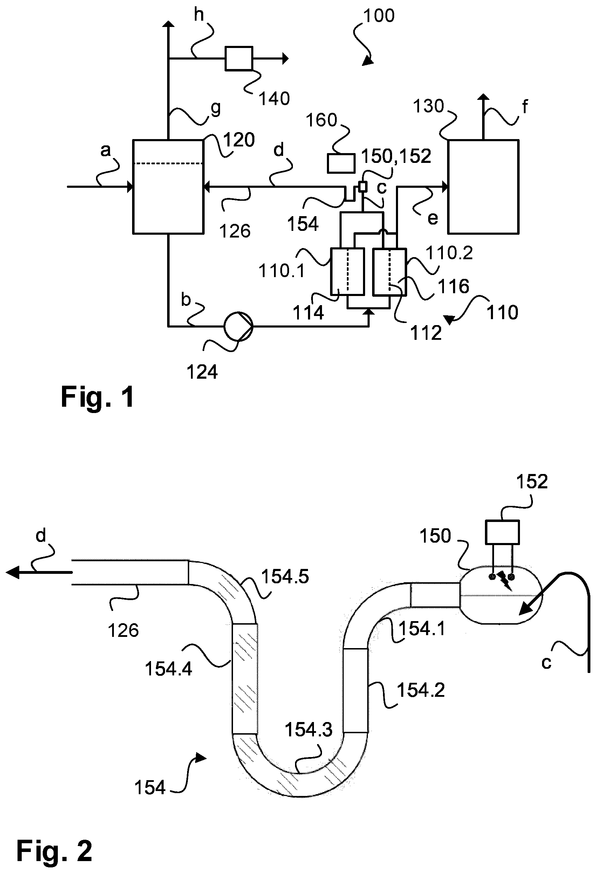

In Figur 1 ist schematisch eine erfindungsgemäße Elektrolyseanlage 100 in einer bevorzugten Ausführungsform dargestellt, bei der auch ein erfindungsgemäßes Verfahren durchführbar ist. Beispielhaft handelt es sich um eine Elektrolyseanlage zur Wasser-Elektrolyse mittels PEM. Insbesondere handelt sich bei der hier gezeigt sowie allgemein im Rahmen der Erfindung beschriebene Elektrolyseanlage um eine Elektrolyseanlage im industriellen Maßstab, um z.B. Wasserstoff in industriellem Maßstab zu gewinnen. Eine typische Leistung einer solchen Elektrolyseanlage liegt z.B. bei mehr als 10 MW oder auch mehr als 20 MW.

Die Elektrolyseanlage 100 weist eine Elektrolyseeinheit 110 auf, die hier beispielhaft zwei sog. Elektrolysezellen oder Stacks 110.1, 110.2 aufweist, in denen jeweils eine Protonen-Austausch-Membran (PEM) 112 vorgesehen ist. Die PEM 112 trennt die Elektrolysezellen jeweils in eine Sauerstoffseite 114 und eine Wasserstoffseite 116. Die Sauerstoffseiten 114 und die Wasserstoffseiten 116 können gemeinsam jeweils als Sauerstoffseite bzw. Wasserstoffseite der Elektrolyseeinheit 110 angesehen werden.

Es sei erwähnt, dass eine Elektrolyseeinheit 110 je nach Größe und Bedarf z.B. auch nur eine oder auch mehr als zwei Elektrolysezellen aufweisen kann.

Die Elektrolyseanlage 100 weist weiterhin einen Behälter 120 auf, der als Gas-Abscheider, hier insbesondere als Sauerstoff-Abscheider bzw. Sauerstoff-Wasser-Abscheider dient. Der Behälter 120 ist über eine Fluidverbindung mit der Elektrolyseeinheit 110 bzw. dort jeder der Elektrolysezellen 110.1, 110.2 verbunden. Hierdurch kann ein Fluidstrom b aus dem Behälter 120 zur Elektrolyseeinheit gepumpt werden, z.B. mittels einer Pumpe 124. Die Elektrolyseeinheit 110 ist zudem über eine Fluidverbindung 126, z.B. Rohre, mit dem Behälter 120 verbunden. Durch die Fluidverbindung 126 kann ein Fluidstrom c aus der Elektrolyseeinheit 110, dort der Sauerstoffseite 114 bzw. der Sauerstoffseite einer jeden Elektrolysezelle, zum Behälter 120 gepumpt werden; hierfür ist ebenfalls die Pumpe 124 ausreichend.

Außerdem weist die Elektrolyseanlage 100 einen weiteren Gas-Ascheider 130, hier einen Wasserstoff-Abscheider bzw. Wasserstoff-Wasser-Abscheider auf.

Wenngleich hier nur eine Elektrolyseeinheit 110 gezeigt ist, so können auch mehrere davon vorgesehen sein, z.B. je nach Größer und Leistung der Elektrolyseanlage 100. Mehrere Elektrolyseeinheiten können dann z.B. trotzdem an einen gemeinsamen Behälter zur Gas- bzw. Sauerstoff-Abscheidung und/oder einen gemeinsamen Wasserstoff-Abscheider angeschlossen sein.

Bei einem Betrieb der Elektrolyseanlage 100 wird nun der Fluidstrom b, der Wasser aufweist, vom Behälter 120 zur Elektrolyseeinheit 110 gepumpt. Dort wird das Wasser in Sauerstoff und Wasserstoff umgesetzt. Hierzu wird eine elektrische Spannung an die Elektrolyseeinheit 110 angelegt, der Wasserstoff wird elektrochemisch durch die PEM 112 auf die Wasserstoffseite 116 transportiert und kann von dort, ggf. noch mit Wasserdampf und einer flüssigen Wasserphase vermischt, als Strom e dem Wasserstoff-Abscheider 130 zugeführt werden. Dort kann der Wasserstoff abgeschieden werden und als Strom f z.B. für eine weitere Verwendung abgeführt oder gespeichert werden. Das abgeschiedene Wasser wird z.B. einer Behandlung zugeführt und dann wieder in den Hauptwasserkreislauf zurückgeführt.

Der Sauerstoff verbleibt zusammen mit dem Großteil des Wassers auf der Sauerstoffseite 114. Wie erwähnt, kann auf der Sauerstoffseite 114 aber auch Wasserstoff in gewisser Menge vorhanden sein. Der entstehende Fluidstrom c weist also Wasser und Gas, insbesondere Wasser, Sauerstoff und Wasserstoff, auf. Der Fluidstrom c wird nun durch eine Zündkammer 150 geführt, in der eine Zündeinrichtung 152 vorgesehen ist. Weiter wird der Fluidstrom durch einen siphon- oder U-förmige Verlauf 154 der Fluidverbindung 126 geführt und erreicht dann als Fluidstrom d den Behälter bzw. den Gas-Abscheider 120. Insgesamt wird also ein Fluidstrom zwischen dem Behälter 120 und der Elektrolyseeinheit 110 umgewälzt.

Wie erwähnt, wird im Behälter 120 Gas, insbesondere Sauerstoff (und ggf. noch vorhandener Wasserstoff), vom Wasser abgetrennt; das hierbei abgetrennte bzw. abgeschiedene Gas sowie kann als Strom g z.B. für eine weitere Verwendung abgeführt oder gespeichert werden. Denkbar ist z.B. eine weitere Abzweigung als Strom h zu einer Aufreinigung, um ggf. noch vorhandenen Wasserstoff zu entfernen und das Gas zu trockenen, oder zu einem Kompressor.

Da in der Elektrolyseeinheit 110 Wasser in Sauerstoff und Wasserstoff umgesetzt wird und der Sauerstoff und der Wasserstoff abgeführt werden, wird die Menge an Wasser geringer und es kann daher - um einen kontinuierlichen Betrieb aufrechtzuerhalten - als Strom a von extern neues Wasser (sog. Make-Up-Wasser) zugeführt werden.

Dieses Wasser a kann zuvor z.B. noch aufbereitet werden, was für die vorliegende Erfindung jedoch nicht weiter relevant ist. Ebenso kann ggf. im Wasserstoff-Abscheider 130 abgeschiedenes Wasser wieder in den Behälter 120, ggf. ebenfalls nach vorheriger Aufbereitung, geführt werden.

In der Zündkammer 150 wird nun z.B. mit einer bestimmten Frequenz eine Zündung einer Zündeinrichtung 152 (also einer Zündquelle) erzeugt, um so ein ggf. in dem Fluidstrom c vorhandenes, zündfähiges Gasgemisch aus Wasserstoff und Sauerstoff zu zünden. Durch den siphon- oder U-förmigen Verlauf 154 und des sich dort einstellenden Strömungsregimes breitet sich die dabei entstehende Druckwelle nicht weiter stromabwärts aus; der resultierende Fluidstrom d weist damit sicher einen Wasserstoffanteil unter der unteren Zündgrenze auf, entweder, weil sich nur wenig Wasserstoff (unter der unteren Zündgrenze) im Stoffstrom c befand oder weil bei höherer Konzentration die Zündung bereits in der Zündkammer 150 erfolgt ist.

Außerdem ist beispielhaft eine Steuereinheit 160 gezeigt, mittels welcher z.B. die Zündeinrichtung 152 angesteuert werden und ggf. auch überwacht werden kann.

In Figur 2 ist schematisch ein Teil der Elektrolyseanlage aus Figur 1 detaillierter dargestellt, und zwar die Fluidverbindung 126 von der Zündkammer 150 bis nach dem siphon- oder U-förmigen Verlauf 154. In die Zündkammer 150 tritt der Fluidstrom c, kommend von der Sauerstoffseite der Elektrolyseeinheit, ein und am Ende tritt der Fluidstrom d aus, der zum Gas-Abscheider geführt wird. Wie schon erwähnt, kann die Zündkammer möglichst nahe an der Elektrolyseeinheit angeordnet sein. Damit kann ein Bereich hoher Designdrücke klein gehalten werden. Außerdem ist eine Anordnung der Zündkammer oberhalb der Elektrolyseeinheit (in Schwerkraftrichtung gesehen) besonders zweckmäßig, um die Elektrolyseeinheit sicher mit Wasser bedeckt zu halten. Eine Einbindung des Fluidstroms c in die Zündkammer 150 sollte insbesondere von oben nach unterhalb des Flüssigstandes erfolgen, wie in Figur 2 angedeutet.

Die Zündkammer 150 ist hier beispielhaft in etwa kugelförmig ausgebildet und die Zündeinrichtung 152 umfasst beispielhaft zwei elektrische Kontakte, die sich in das Innere der Zündkammer erstrecken. Durch Anlegen einer elektrischen Spannung an diese Kontakte kann in der Zündkammer 150 aktiv eine Zündung herbeigeführt bzw. erzeugt werden. Die Zündung ist beispielhaft als ein Blitzsymbol angedeutet.

Beispielhaft weist die Fluidverbindung 126, in Strömungsrichtung, nach der Zündkammer 150 einen siphon- oder U-förmigen Verlauf auf 154. Hierbei verläuft die Fluidverbindung 126 - es kann sich grundsätzlich um ein Rohr oder dergleichen handeln - kurz horizontal, hat dann eine bogenförmigen Abschnitt 154.1 (mit ca. 90° Biegung) und geht damit in einen vertikal nach unten verlaufenden Abschnitt 154.2 über. Dann geht der Abschnitt 154.2 mit einem bogenförmigen Abschnitt 154.3 (mit ca. 180° Biegung) in einen vertikal nach oben verlaufenden Abschnitt 154.4. Dann geht der Abschnitt 154.4 mit einem bogenförmigen Abschnitt 154.5 (mit ca. 90° Biegung) wieder in einen horizontal verlaufenden Abschnitt über; dieser kann dann z.B. bis zum Behälter weiter horizontal verlaufen.

Dabei ist der siphon- oder U-förmige Verlauf der Fluidverbindung derart ausgebildet, dass, in Strömungsrichtung, zuerst ein zumindest im Wesentlichen vertikal nach unten (d.h. in Gravitationsrichtung) und dann ein zumindest im Wesentlichen vertikal nach oben (d.h. entgegen der Gravitationsrichtung) verlaufender Abschnitt vorgesehen sind. Ein solcher Verlauf der Fluidleitung, z.B. in Form eines entsprechend geformten Rohres, stellt sicher, dass eine auftretende Explosionsfront sich stromabwärts nicht weiter ausbreitet, sondern durch den siphon- oder U-förmige Verlauf von der weiteren Ausbreitung abgehalten wird.

Wie erwähnt, wird durch die Zündung in der Zündkammer 150 ein ggf. vorhandenes zündfähiges Gemisch zur Explosion gebracht, deren Druckwelle sich aufgrund des siphon- oder U-förmigen Verlauf allerdings nur bis höchstens in etwas zum Ende (in Strömungsrichtung) des Abschnitts 154.4 ausbreitet. Insofern müssen die Fluidverbindung 126 weiter stromabwärts - und ebenso der Behälter 120 sowie ggf. weitere Gasverbindungen (z.B. für die Ströme g und h) - nicht explosions- oder detonationsfest ausgelegt werden. Vielmehr ist es ausreichend, wenn die Zündkammer 150, die Fluidverbindung 126 bis einschließlich des Abschnitts 154.4 (oder ggf. auch etwas weiter) und stromaufwärts der Zündkammer 150 explosions- und detonationsfest ausgebildet wird.

Wie schon erwähnt, sollte der siphon- oder U-förmige Verlauf 154, insbesondere hinsichtlich Durchmesser und Längen der einzelnen Abschnitte, derart ausgebildet sein, dass kein "annular flow" (Ringströmung oder Filmströmung) und kein "mist flow" (Nebelströmung) auftreten.

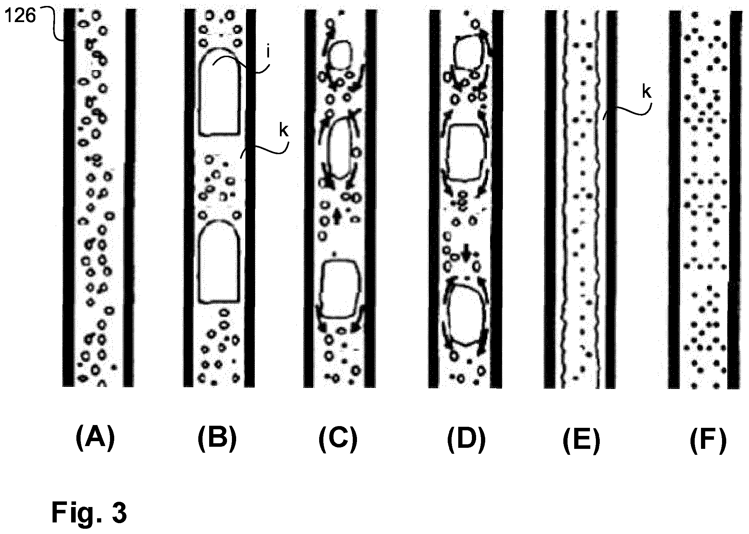

Hierzu sind in Figur 3 verschiedene Strömungsarten dargestellt. Dabei sind in jeder Ansichten (A) bis (F) jeweils ein Teil der Fluidverbindung 126 gezeigt, und zwar insbesondere im Bereich des siphon- oder U-förmige Verlauf 154, dort wiederum insbesondere dort, wo in Figur 2 leichte Schraffierungen im Inneren gezeigt sind. Mit i sind dabei Gasblasen bezeichnet, mit k hingegen ist Flüssigkeit bezeichnet.

Ansicht (A) veranschaulicht einen sog. "bubble flow" (Blasenströmung), bei dem sich mittlere Gasblasen in der Flüssigkeit verteilen. Ansicht (B) veranschaulicht einen sog. "slug flow" (Pfropfenströmung), Ansichten (C) und (D) veranschaulichen jeweils einen sog. "churn flow" (Kippenströmung oder Schaumströmung), jedoch in verschiedenen Arten. Diese drei bzw. vier Arten der Strömung sind erlaubt oder erwünscht, um die Gasphase zwischen der Zündkammer 150 und der Fluidverbindung 126 sicher zu unterbrechen und eine Ausbreitung der Druckwelle Richtung stromabwärts zu verhindern.

Ansicht (E) veranschaulicht einen sog. "annular flow" (Ringströmung oder Filmströmung), bei dem sich an der Wandung der Fluidverbindung (bzw. des Rohres) reine Flüssigkeit sammelt, weiter innen hingegen eine feine Mischung aus Gas und Flüssigkeit. Ansicht (F) veranschaulicht einen sog. "mist flow" (Nebelströmung), bei dem sich durchgehend eine feine Mischung aus Gas und Flüssigkeit einstellt. Diese beiden Arten der Strömung sollten durch geeignete Formgebung des siphon- oder U-förmige Verlauf 154 verhindert werden. Eine Strömungsform kann durch die Strömungsgeschwindigkeit beeinflusst werden, also insbesondere durch den Durchmesser der Rohrleitung, in besondere im vertikal steigenden Teil.

## Patentansprüche

1. Verfahren zum Betreiben einer Elektrolyseanlage (100), in der Wasser in einer Elektrolyseeinheit (110) in Sauerstoff und Wasserstoff umgesetzt wird,
wobei von einer Sauerstoffseite (116) der Elektrolyseeinheit zu einem Gas-Abscheider (120) ein Fluidstrom (c, d) geführt wird, der Wasser und Gas aufweist,
wobei in dem Fluidstrom (c) aktiv eine Zündung einer Zündeinrichtung (152) erzeugt wird.

2. Verfahren nach Anspruch 1, wobei die Zündung in regelmäßigen oder unregelmäßigen zeitlichen Abständen, insbesondere mit einer vorgegebenen Frequenz, erzeugt wird.

3. Verfahren nach Anspruch 1 oder 2, wobei überwacht wird, ob die Zündung erzeugt wird, und wobei insbesondere, wenn erkannt wird, dass die Zündung nicht erzeugt wird, eine Fehlerreaktion eingeleitet wird.

4. Verfahren nach einem der vorstehenden Ansprüche, wobei in dem Fluidstrom (c) zwischen der Zündeinrichtung (152) und dem Gas-Abscheider 120 eine Gasphase durch eine Flüssigphase unterbrochen wird, insbesondere mittels einer Anpassung einer Strömungsform einer Zweiphasenströmung.

5. Elektrolyseanlage (100) mit einer Elektrolyseeinheit (110), in der Wasser in Sauerstoff und Wasserstoff umsetzbar ist, mit einem Gas-Abscheider (120), und mit einer Fluidverbindung (126), über die eine Sauerstoffseite (114) der Elektrolyseeinheit (110) mit dem Gas-Abscheider (120) verbunden ist,
wobei die Elektrolyseanlage (100) eingerichtet ist, in der Fluidverbindung (126), von der Sauerstoffseite (114) der Elektrolyseeinheit zu dem Gas-Abscheider (120), einen Fluidstrom (c, d) zu erzeugen, wobei der Fluidstrom Wasser und Gas aufweist,
wobei die Elektrolyseanlage (100) eine Zündeinrichtung (152) in der Fluidverbindung (126) aufweist und eingerichtet ist, in der Fluidverbindung aktiv eine Zündung der Zündeinrichtung (152) zu erzeugen.

6. Elektrolyseanlage (100) nach Anspruch 5, die eine Zündkammer (150) als Teil der Fluidverbindung (126) aufweist, wobei die Zündeinrichtung (152) in der Zündkammer (150) angeordnet ist.

7. Elektrolyseanlage (100) nach Anspruch 6, wobei die Fluidverbindung (126), in Strömungsrichtung, nach der Zündkammer (150), insbesondere unmittelbar nach der Zündkammer, einen siphon- oder U-förmigen Verlauf (154) aufweist.

8. Elektrolyseanlage (100) nach Anspruch 7, wobei der siphon- oder U-förmige Verlauf (154) der Fluidverbindung derart ausgebildet ist, dass, in Strömungsrichtung, zuerst ein zumindest im Wesentlichen vertikal nach unten (154.2) und dann ein zumindest im Wesentlichen vertikal nach oben verlaufender Abschnitt (154.4) vorgesehen sind.

9. Elektrolyseanlage (100) nach einem der Ansprüche 6 bis 8, wobei die Zündkammer (150) oberhalb der Elektrolyseeinheit (110) und/oder, in Strömungsrichtung, unmittelbar nach der Elektrolyseeinheit (110) angeordnet ist.

10. Elektrolyseanlage (100) nach einem der Ansprüche 5 bis 9, die eingerichtet ist, ein Verfahren nach einem der Ansprüche 1 bis 4 durchzuführen.

## Claims

1. A method for operating an electrolysis system (100) in which water is converted into oxygen and hydrogen in an electrolysis unit (110),
wherein a fluid stream (c, d) that comprises water and gas is conveyed from an oxygen side (116) of the electrolysis unit to a gas separator (120),
wherein an ignition of an ignition device (152) is actively generated in the fluid stream (c).

2. The method according to claim 1, wherein the ignition is generated at regular or irregular time intervals, in particular at a prespecified frequency.

3. The method according to claim 1 or 2, wherein it is monitored whether the ignition has been generated, and wherein in particular if it is detected that the ignition has not been generated, an error reaction is initiated.

4. The method according to any of the preceding claims, wherein in the fluid stream (c) between the ignition device (152) and the gas separator (120), a gas phase is interrupted by a liquid phase, in particular by means of an adaptation of a flow type of a two-phase flow.

5. An electrolysis system (100) having an electrolysis unit (110) in which water can be converted into oxygen and hydrogen, and having a gas separator (120) and having a fluid connection (126) via which an oxygen side (114) of the electrolysis unit (110) is connected to the gas separator (120),
wherein the electrolysis system (100) is configured to generate a fluid stream (c, d) in the fluid connection (126) from the oxygen side (114) of the electrolysis unit to the gas separator (120), wherein the fluid stream comprises water and gas,
wherein the electrolysis system (100) has an ignition device (152) in the fluid connection (126) and is configured to actively generate an ignition of the ignition device (152) in the fluid connection.

6. The electrolysis system (100) according to claim 5, which has an ignition chamber (150) as part of the fluid connection (126), wherein the ignition device (152) is arranged in the ignition chamber (150).

7. The electrolysis system (100) according to claim 6, wherein the fluid connection (126) has a siphon-shaped or U-shaped course (154) after the ignition chamber (150), in particular immediately after the ignition chamber, in the direction of flow.

8. The electrolysis system (100) according to claim 7, wherein the siphon-shaped or U-shaped course (154) of the fluid connection is designed such that there are, in the direction of flow, first an at least substantially vertically downward portion (154.2) and then an at least substantially vertically upward portion (154.4).

9. The electrolysis system (100) according to any of claims 6 to 8, wherein the ignition chamber (150) is arranged above the electrolysis unit (110) and/or, in the direction of flow, immediately after the electrolysis unit (110).

10. The electrolysis system (100) according to any of claims 5 to 9, which is configured to carry out a method according to any of claims 1 to 4.

## Revendications

1. Procédé permettant de faire fonctionner une installation d'électrolyse (100) dans laquelle de l'eau est transformée en oxygène et en hydrogène dans une unité d'électrolyse (110),
dans lequel un écoulement de fluide (c, d) présentant de l'eau et du gaz est amené depuis un côté oxygène (116) de l'unité d'électrolyse à un séparateur de gaz (120),
dans lequel un allumage d'un dispositif d'allumage (152) est généré activement dans l'écoulement de fluide (c).

2. Procédé selon la revendication 1, dans lequel l'allumage est généré à des intervalles de temps réguliers ou irréguliers, en particulier à une fréquence prédéfinie.

3. Procédé selon la revendication 1 ou 2, dans lequel on surveille si l'allumage est généré, et dans lequel, en particulier, s'il est détecté que l'allumage n'est pas généré, une réaction d'erreur est déclenchée.

4. Procédé selon l'une des revendications précédentes, dans lequel, dans l'écoulement de fluide (c) entre le dispositif d'allumage (152) et le séparateur de gaz (120), une phase gazeuse est interrompue par une phase liquide, en particulier au moyen d'une adaptation d'une forme d'écoulement d'un écoulement diphasique.

5. Installation d'électrolyse (100) comportant une unité d'électrolyse (110) dans laquelle de l'eau peut être convertie en oxygène et en hydrogène, comportant un séparateur de gaz (120), et comportant une liaison fluidique (126) par l'intermédiaire de laquelle un côté oxygène (114) de l'unité d'électrolyse (110) est relié au séparateur de gaz (120),
dans laquelle l'installation d'électrolyse (100) est conçue pour générer un écoulement de fluide (c, d) dans la liaison fluidique (126), du côté oxygène (114) de l'unité d'électrolyse jusqu'au séparateur de gaz (120), dans laquelle l'écoulement de fluide présente de l'eau et du gaz,
dans laquelle l'installation d'électrolyse (100) présente un dispositif d'allumage (152) dans la liaison fluidique (126) et est conçue pour générer activement un allumage du dispositif d'allumage (152) dans la liaison fluidique.

6. Installation d'électrolyse (100) selon la revendication 5, laquelle présente une chambre d'allumage (150) faisant partie de la liaison fluidique (126), dans laquelle le dispositif d'allumage (152) est disposé dans la chambre d'allumage (150).

7. Installation d'électrolyse (100) selon la revendication 6, dans laquelle la liaison fluidique (126) présente, dans le sens d'écoulement, un tracé (154) en forme de siphon ou de U après la chambre d'allumage (150), en particulier immédiatement après la chambre d'allumage.

8. Installation d'électrolyse (100) selon la revendication 7, dans laquelle le tracé (154) en forme de siphon ou de U de la liaison fluidique est réalisé de telle sorte que, dans le sens d'écoulement, une section (154.2) s'étendant au moins sensiblement verticalement vers le bas est d'abord prévue, et ensuite, une section (154.4) s'étendant au moins sensiblement verticalement vers le haut est prévue.

9. Installation d'électrolyse (100) selon l'une des revendications 6 à 8, dans laquelle la chambre d'allumage (150) est disposée au-dessus de l'unité d'électrolyse (110) et/ou, dans le sens d'écoulement, immédiatement après l'unité d'électrolyse (110).

10. Installation d'électrolyse (100) selon l'une des revendications 5 à 9, laquelle est conçue pour mettre en œuvre un procédé selon l'une des revendications 1 à 4.
